# EUROPEAN PATENT APPLICATION

(11) **EP 0 808 707 A2**
(43) Date of publication of application: **26.11.1997**
(21) Application number: 97107106.3
(22) Date of filing: 29.04.1997
(51) Int. Cl.: B29D 30/24, B29D 30/32

(54) **Tyre building drum having a turn-up device**

(30) Priority: 21.05.1996 JP 125855/96
(71) Applicant: MITSUBISHI HEAVY INDUSTRIES, LTD., Tokyo 100 (JP)
(72) Inventor: Miyamoto, Yoshinori, Mitsubishi Jukogyo K.K., Nagasaki-shi, Nagasaki-ken (JP); Agawa, Jiro, Mitsubishi Jukogyo K.K., Nagasaki-shi, Nagasaki-ken (JP); Fukamachi, Yoshihiro, Mitsubishi Jukogyo K.K., Nagasaki-shi, Nagasaki-ken, (JP)
(74) Representative: Henkel, Feiler, Hänzel & Partner

(57) **Abstract**

A tire element turn-up device in a tire molding drum comprises; bead lock segments (6), each supporting an end portion (A₁) of tire element (A) and being expansible and contractible in a radial direction; a bead lock expanding and contracting means (7,8) for expanding and contracting each said bead lock segment (6) in the radial direction by reciprocal movement; a cylindrical moving means (11) movable in an axial direction relative to said bead lock expanding and contracting means (7,8); fingers (9), each pivoted to said cylindrical moving means (11) turnably around a pivotal fulcrum in the radial direction so that its front end portion abuts on the end portion (A₁) of the tire element (A); and a finger expanding and contracting means (15,16) for expanding and contracting each said finger (9) by movement in the axial direction so as to move the front end of each said finger (9) in the radial direction, thus the end portion (A₁) of the tire element (A) is turned-up by cooperative movement of said bead lock expanding and contracting means (7,8) and said finger expanding and contracting means (15,16).

## Description

### BACKGROUND OF THE INVENTION:

### Field of the Invention:

The present invention relates to a tire element end winding device in a tire molding drum for manufacturing a tire used for an automobile, a wheeled vehicle, etc.

### Description of the Prior Art:

As a tire element end winding device in said tire molding drum, a double bladder system and a single bladder system are used widely.

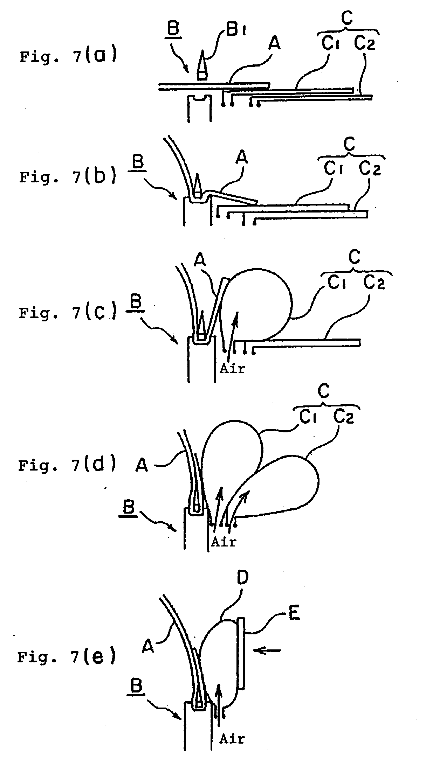

Figs. 7(a) to (d) show an operating status of one example of the double bladder system in the prior art. In Figs. 7(a) to (d), character A designates a tire element, character B designates a bead lock mechanism and character C (C₁ and C₂) designates a double bladder, and at the time of winding of the tire element A, an end portion of the tire element A is first placed so as to be located on the double bladder C, as shown in Fig. 7(a). Then, as shown in Fig. 7(b), a vicinity of the end portion of the tire element A is locked by the bead lock mechanism B and then, as shown in Fig. 7(c), a pressurized air is supplied into an outer bladder C₁ of the double bladder C so that the outer bladder C₁ is expanded and the end portion of the tire element A is lifted up. Further, as shown in Fig. 7(d), a pressurized air is supplied into an inner bladder C₂ so that the inner bladder C₂ is expanded and the end portion of the tire element A is finally wound.

Fig. 7(e) shows one example of the single bladder system in the prior art. In Fig. 7(e), character A designates a tire element, character B designates a bead lock mechanism and character D designates a single bladder, and as shown there, a vicinity of an end portion of the tire element A is locked by the bead lock mechanism B, then a pressurized air is supplied into the single bladder D, and as the single bladder D is expanded, an urging plate E is moved to the direction of arrow of the figure, so that the end portion of the tire element A is finally wound.

There are problems as mentioned below, however, in such tire element end winding devices in the prior art as shown in Fig. 7.

That is, the bladder C of the devices in the prior art is made of rubber. And at the time of winding of the end portion of the tire element A, it is necessary to apply another member onto the bladder C or to interpose a band-like member formed at a separate stage, but as the bladder C is made of rubber as mentioned above, there may occur a break of the bladder C or, if not a break, a permanent elongation of an outer diameter due to deformation growth of the bladder C. This becomes a large obstacle factor in securing an accuracy of tire molding and in performing an operational work for tire molding.

Also, as the bladder C is expanded and the end portion of the tire element A is wound, it is necessary to control the air amount introduced therein precisely. And even if the air amount to be introduced is once set, in case the bladder C is to be replaced with a new one, it becomes necessary to make a new setting corresponding to a different expansion property, which requires an increase of man hour and brings about a lower efficiency.

### SUMMARY OF THE INVENTION:

A first object of the present invention, therefore, is to provide a tire element end winding device which enables to make winding of an end portion of a tire element without using a rubber bladder as in the prior art so as to attain said winding with a high accuracy and automatically, thereby efficiency of the winding work is enhanced and a tire element having a stable quality can be obtained.

Also, a second object of the present invention is to provide a tire element end winding device which enables to suppress an increase of an axial directional length of the winding device even with an increased winding amount, thereby the winding device can be made compact.

In order to attain said object, the present invention discloses, as a first means, a tire element end winding device in a tire molding drum in which an end portion of a tire element formed in a predetermined shape is bent at a winding base portion to be wound for a molding of said end portion, characterized in comprising:
a plurality of bead lock segments, each supporting said winding base portion of the end portion of the tire element and being expansible and contractible in a radial direction;
a bead lock expanding and contracting means for expanding and contracting each said bead lock segment in the radial direction by a forward and backward movement in an axial direction of a drum shaft;
a cylindrical moving means disposed movably in the axial direction of said drum shaft relative to said bead lock expanding and contracting means;
a plurality of fingers, each disposed in the axial direction with one end portion being pivoted so as to be expansible and contractible therearound in the radial direction at an equally spaced position on an outer circumference of said cylindrical moving means and the other end portion elongating toward a direction of each said bead lock segment so as to abut on the end portion of the tire element;
a finger activating means for activating each said finger inwardly in the radial direction; and
a finger expanding and contracting means disposed movably forward and backward between said cylindrical means and each said bead lock segment for turning each said finger around a pivotal fulcrum by a movement in the axial direction so as to move said the other end of each said finger in the radial direction,
   and further characterized in that, as said finger expanding and contracting means is moved forward so that a roller disposed at said the other end portion of each said finger abuts on the end portion of the tire element, each said finger is expanded outwardly in the radial direction, thereby the end portion of the tire element is wound.

Also, the present invention discloses, as a second means, a tire element end winding device in a tire molding drum as mentioned above as the first means, characterized in that, as said the other end portion of each said finger abuts on a tip end portion of each said bead lock segment, said the other end portion of each said finger is expanded radially by a cooperative movement of a radial expansion of each said bead lock segment effected by said bead lock expanding and contracting means and a radial expansion of said finger expanding and contracting means.

Also, the present invention discloses, as a third means, a tire element end winding device in a tire molding drum as mentioned above as the first means or the second means, characterized in that said finger expanding and contracting means comprises a cam member having an inclined cam face which abuts on each said finger via a cam roller and lifts said the other end portion of each said finger by a movement in the axial direction of the drum shaft.

According to said first to third means, starting from a state that the cylindrical moving means and the finger expanding and contracting means are moved backward and each finger is contracted inwardly in the radial direction by the finger activating means, each bead lock segment is expanded radially and at the same time each said finger is expanded outwardly in the radial direction turningly around the pivotal fulcrum via the roller abutting on the tip end portion of each said bead lock segment, thereby there occurs no space under the tire element. Then, the finger expanding and contracting means is moved forward so that the inclined cam face of the finger expanding and contracting means may abut on the cam roller of each said finger, thus each said finger is expanded radially and the end portion of the tire element is lifted. Then, the cylindrical moving means is moved forward and each said finger is moved forward to the central portion of the drum so that each roller disposed at the front end portion of the finger makes contact with the end portion of the tire element so as to push it up outwardly in the radial direction, thus the end portion of the tire element is further lifted and wound. When the cylindrical moving means is moved forward to the position of the maximum stroke, winding of the tire element end is completed. Then, the finger expanding and contracting means is moved backward, the cylindrical moving means is also moved backward and each said finger is contracted radially by the finger activating means, thus the state of start is restored.

Accordingly, without necessity of a rubber bladder as used in the prior art, winding of the tire element end can be done, thereby the winding of the tire element end can be done with a high accuracy and automatically, operation efficiency is enhanced and a tire element of a stable quality can be obtained.

Also, as to the amount of the radial directional expansion, a total expansion (a + b) of that (a) by the inclined cam face of the finger expanding and contracting means and that (b) by the bead lock segment is obtained, as described later herein, thereby a large radial directional expansion can be obtained without necessity of elongating the stroke of the finger expanding and contracting means and the winding device itself can be made compact.

Incidentally, the bead lock expanding and contracting means and the finger expanding and contracting means are preferably of a reciprocating piston mechanism operated by a pneumatic pressure or a hydraulic pressure.

### BRIEF DESCRIPTION OF THE DRAWINGS:

In the accompanying drawings:
Fig. 1 is a longitudinal cross sectional view showing an entire construction of a tire element end winding device in a tire molding machine of a preferred embodiment according to the present invention.
Fig. 2 is a detailed longitudinal cross sectional view showing a right hand side half of the tire element end winding device of said preferred embodiment.
Fig. 3 is a view of said preferred embodiment taken on line X-X of Fig. 2.
Fig. 4 are explanatory longitudinal cross sectional views of the tire element end winding device of said preferred embodiment.
Fig. 5 is a partial schematic view of a vicinity of a tire element end portion for explaining function of said preferred embodiment.
Figs. 6(a) and (b) are partial schematic views of a vicinity of a finger expanding and contracting means for explaining function of said preferred embodiment.
Figs. 7(a) to (e) are explanatory views of function of a tire element end winding device in the prior art.

### DESCRIPTION OF THE PREFERRED EMBODIMENTS:

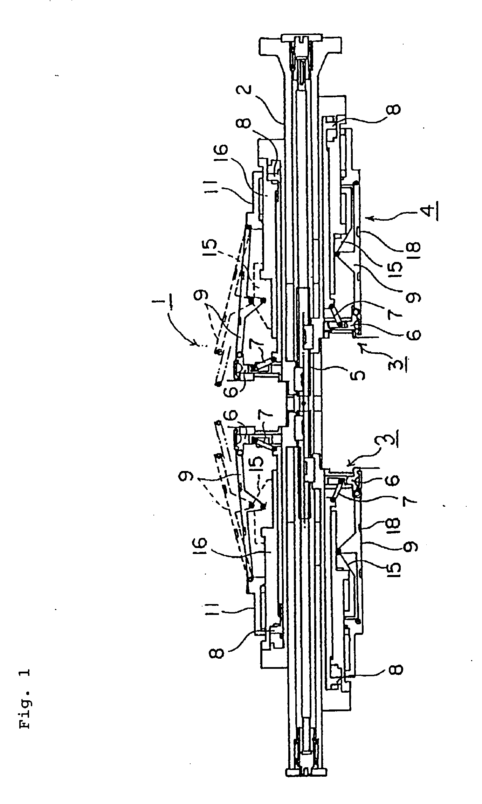

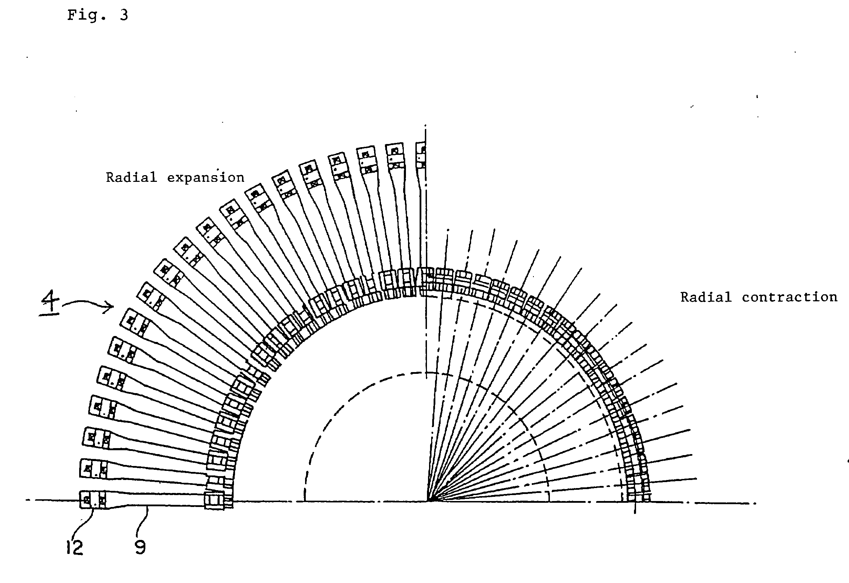

In Figs. 1 to 3, character A designates a tire element and numeral 1 designates a tire element end winding device, of which construction is as follows:

That is, numeral 2 designates a drum shaft, numeral 16 designates a double cylindrical piston fitted movably forward and backward in the drum shaft direction on an outer circumferential surface of the drum shaft and numeral 5 designates a spiral bar drive device for moving the double cylindrical piston 16 forward and backward in the drum shaft direction.

Also, numeral 3 designates a bead lock mechanism, in which numeral 6 is a plurality of bead lock segments, which support a tire bead portion, fitted expansibly and contractibly in a radial direction at a front end portion of the double cylindrical piston 16, numeral 8 is a piston provided insertedly in the inside of the double cylindrical piston 16 so as to be movable in an axial direction of the drum shaft 2, numeral 8' is an air chamber formed at a position behind the piston 8 within a rear portion of the double cylindrical piston 16, numeral 7 is a plurality of links connecting a front end of the piston 8 and each said bead lock segment 6.

Also, in Figs. 1 to 3, numeral 4 designates a winding mechanism for winding an end portion of the tire element A around a tire bead. In the winding mechanism 4, numeral 9 designates a plurality of fingers, numeral 10 designates a pivotal pin for supporting each said finger 9 and numeral 11 designates a cylindrical moving means. The cylindrical moving means 11 is supported on an outer circumferential surface of the rear portion of the double cylindrical piston 16 so as to be movable forward and backward in the axial direction of the drum shaft 2. A rear end portion of each said finger 9 is supported by the pivotal pin 10 at a front end portion of the cylindrical moving means 11 with an equal space in a circumferential direction so as to be expansible and contractible in the radial direction, and a front end portion of each said finger 9 elongates toward a direction of the bead lock segments 6.

Numeral 12 designates a roller provided at the front end portion of each said finger 9 so that each said finger 9 makes contact with the tire element A via the roller 12 and the front end portion of each said finger 9 slides smoothly on the tire element A. The roller 12 of each said finger 9, before its radial expansion, is supported by a supporting member 13 of each said bead lock segment 6 and as each said bead lock segment 6 makes a radial expansion, the roller 12 also expands radially.

A cam roller 14 is provided on an inner surface of a central portion of each said finger 9, and a cam member (finger expanding and contracting means) 15 is provided at an engagement position of the cam roller 14. The cam member (finger expanding and contracting means) 15 is supported on an outer circumferential surface of a front portion of the double cylindrical piston 16 so as to be movable forward and backward in the axial direction of the drum shaft 2.

Numeral 16' designates one air chamber formed between the cam member 15 and the double cylindrical piston 16 and numeral 16'' designates another air chamber formed between the cam member 15 and the double cylindrical piston 16. Numeral 17' designates an air chamber formed between the cylindrical moving means 11 and the double cylindrical piston 16. A finger activating means 18 is provided on an outer circumferential surface of the central portion of each said finger 9 so as to surround the fingers 9 and each said finger 9 is activated toward a contraction direction by the finger activating means 18.

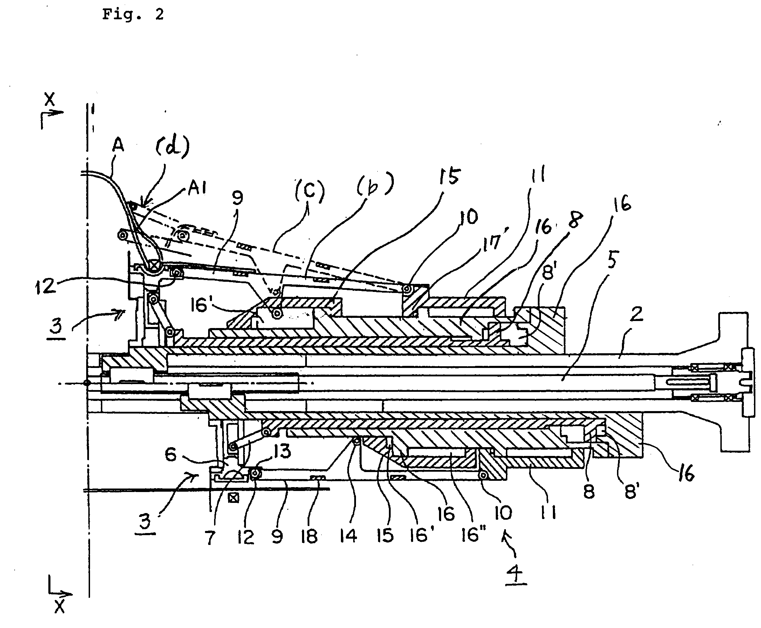

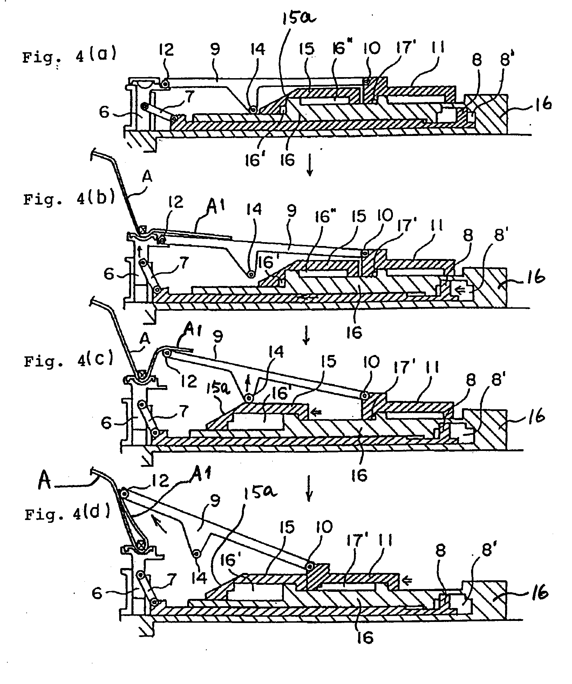

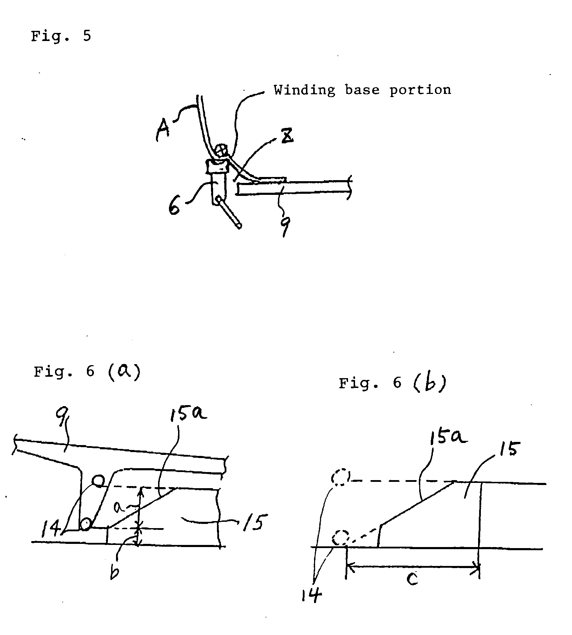

Next, a function of the tire element end winding device shown in Figs. 1 to 3 is described with reference to Fig. 4. Incidentally, an upper half of the axis of the drum shaft 2 of Fig. 1 shows a state where the double cylindrical piston 16 and the piston 8 are moved forward to a central portion of the drum and a lower half of same shows a state before movement of said pistons 16, 8.
(1) Fig. 4(a) shows a state where the cylindrical moving means 11 and the cam member (finger expanding and contracting means) 15 are moved back and each said finger 9 is contracted in the radial direction by the finger activating means 18. In this state, a compressed air is supplied into the air chamber 8' behind the piston 8 from a compressed air supply means (not shown) so that the piston 8 is moved forward and then the movement of the piston 8 is transmitted to each said bead lock segment 6 via the respective link 7 so that each said bead lock segment 6 is expanded radially. Incidentally, a hydraulic pressure may be used in place of the compressed air. Thus, each said finger 9 is expanded to a position shown in Fig. 4(b) outwardly in the radial direction turningly around a center of the pivotal pin 10 via the roller 12 abutting on the support member 13 of each said bead lock segment 6.
   Incidentally, if each said finger 9 does not make a radial expansion concurrently with each said bead lock segment 6, there occurs a space Z, shown in Fig. 5, under the tire element A, but as mentioned above, all the fingers 9 make radial expansion concurrently with all the bead lock segments 6 and there occurs no space Z under the tire element A.
(2) Then, a compressed air is supplied into the air chamber 16' formed between the cam member 15 (finger expanding and contracting means) and the double cylindrical piston 16 from a compressed air supply means (not shown) so that the cam member 15 (finger expanding and contracting means) is moved forward to a position shown in Fig. 4(c). Thus, by the movement of an inclined cam face 15a of the cam member 15 abutting on the cam roller 14 of each said finger 9, each said finger 9 is expanded in the radial direction to a position shown in Fig. 4(c) so that an end portion A₁ of the tire element A is lifted.
   Incidentally, an amount of the radial expansion effected by the inclined cam face 15a of the cam member 15 is "a" shown in Fig. 6(a) and a total amount of the radial expansion becomes (a + b), where "b" is an amount of the radial expansion effected by the bead lock segment 6. If same radial expansion of (a + b) is to be secured without the radial expansion amount of b, there is necessity of forming the inclined cam face 15a of the cam member 15 with a range "c" shown in Fig. 6(b), which needs elongation of stroke of the cam member 15 so as to correspond to the length c and a resultant device becomes larger.
(3) Then, a compressed air is supplied into the air chamber 17' formed between the cylindrical moving means 11 and the double cylindrical piston 16 from a compressed air supply means (not shown) so that the cylindrical moving means 11 is moved forward to a position shown in Fig. 4(d) and thus each said finger 9 is moved forward to a central portion of the drum. At this time, each said roller 12 keeps contact with an end of the tire element A to further lift and wind the end portion A₁ of the tire element A, and when the cylindrical moving means 11 is moved forward to a position of Fig. 4(d), winding of the end portion A₁ of the tire element A is completed.
(4) Thereafter, a compressed air is supplied into the other air chamber 16'' formed between the cam member 15 and the double cylindrical piston 16 from a compressed air supply means (not shown) so that the cam member (finger expanding and contracting means) 15 is moved backward as shown in Fig. 4(a) and the cylindrical moving means 11 is also moved backward, thus each said finger 9 is contracted radially by the finger activating means 18 and the state of start is restored.
   Incidentally, positions (b), (c) and (d) of the finger 9 of Fig. 2 correspond to the positions of same shown in Figs. 4(b), (c) and (d), respectively.

While the preferred form of the present invention has been described, variation thereto will occur to those skilled in the art within the scope of the present inventive concepts which are delineated by the following claims.

## Claims

1. A tire element end winding device in a tire molding drum in which an end portion (A₁) of a tire element (A) formed in a predetermined shape is bent at a winding base portion to be wound for a molding of said end portion (A₁), characterized in comprising:
a plurality of bead lock segments (6), each supporting said winding base portion of the end portion (A₁) of the tire element (A) and being expansible and contractible in a radial direction;
a bead lock expanding and contracting means (7, 8) for expanding and contracting each said bead lock segment (6) in the radial direction by a forward and backward movement in an axial direction of a drum shaft (2);
a cylindrical moving means (11) disposed movably in the axial direction of said drum shaft (2) relative to said bead lock expanding and contracting means (7, 8);
a plurality of fingers (9), each disposed in the axial direction with one end portion being pivoted so as to be expansible and contractible therearound in the radial direction at an equally spaced position on an outer circumference of said cylindrical moving means (11) and the other end portion elongating toward a direction of each said bead lock segment (6) so as to abut on the end portion (A₁) of the tire element (A);
a finger activating means (18) for activating each said finger (9) inwardly in the radial direction; and
a finger expanding and contracting means (15, 16) disposed movably forward and backward between said cylindrical means (11) and each said bead lock segment (6) for turning each said finger (9) around a pivotal fulcrum by a movement in the axial direction so as to move said the other end of each said finger (9) in the radial direction,
and further characterized in that, as said finger expanding and contracting means (15, 16) is moved forward so that a roller (12) disposed at said the other end portion of each said finger (9) abuts on the end portion (A₁) of the tire element (A), each said finger (9) is expanded outwardly in the radial direction, thereby the end portion (A₁) of the tire element (A) is wound.

2. A tire element end winding device in a tire molding drum as claimed in Claim 1, characterized in that, as said the other end portion of each said finger (9) abuts on a tip end portion of each said bead lock segment (6), said the other end portion of each said finger (9) is expanded radially by a cooperative movement of a radial expansion of each said bead lock segment (6) effected by said bead lock expanding and contracting means (7, 8) and a radial expansion of said finger expanding and contracting means (15, 16).

3. A tire element end winding device in a tire molding drum as claimed in any one of Claims 1 and 2, characterized in that said finger expanding and contracting means (15, 16) comprises a cam member (15) having an inclined cam face which abuts on each said finger (9) via a cam roller (14) and lifts said the other end portion of each said finger (9) by a movement in the axial direction of the drum shaft (2).

4. A tire element end winding device in a tire molding drum as claimed in any one of Claims 1 to 3, characterized in that said bead lock expanding and contracting means (7, 8) and said finger expanding and contracting means (15, 16) comprise a reciprocating piston mechanism operated by a pneumatic pressure or a hydraulic pressure.
